# EUROPEAN PATENT APPLICATION

(11) **EP 4 745 649 A1**
(43) Date of publication of application: **20.05.2026**
(21) Application number: 23953147.8
(22) Date of filing: 18.09.2023
(51) Int. Cl.: G02B 27/01, B60K 35/00

(54) **DISPLAY DEVICE FOR VEHICLE**

(71) Applicant: LG Electronics Inc., Yeongdeungpo-gu Seoul 07336 (KR)
(72) Inventor: LEE, Sangil, Seoul 06772 (KR); KIM, Doohee, Seoul 06772 (KR); KWON, Yunyoung, Seoul 06772 (KR); LEE, Kyoungil, Seoul 06772 (KR); LEE, Seunggyu, Seoul 06772 (KR)
(74) Representative: Schott, Jakob Valentin
(86) International application number: PCT/KR2023/014054
(87) International publication number: WO 2025/063322

(57) **Abstract**

The present disclosure relates to a display device for a vehicle. The display device for a vehicle according to an embodiment of the present disclosure may comprise: an image generation device for outputting a first polarized projection image; a concave mirror including a phase delay layer for polarization conversion between first polarized light and second polarized light; and a transparent cover including a polarized layer for transmitting the first polarized light and reflecting the second polarized light. The concave mirror may convert a first polarized projection image output from the image generation device into a second polarized projection image and may primarily reflect same to the transparent cover. The transparent cover may reflect the second polarized projection image to the concave mirror. The concave mirror may convert the second polarized projection image into the first polarized projection image and may secondarily reflect same to the transparent cover. The transparent cover may transmit the first polarized projection image. Accordingly, the size can be reduced while realizing a projection image on a large screen.

## Description

### [Technical Field]

The present disclosure relates to a display device for a vehicle, and more particularly, to a display device for a vehicle whose size may be reduced while implementing a large-screen projection image.

### [Background]

A vehicle is an apparatus that moves in the direction desired by a user riding in it. A representative example is an automobile.

Meanwhile, a display device for a vehicle is installed inside the vehicle, for the convenience of a user using the vehicle.

For example, a display is placed on a cluster, etc., to display various types of information. Meanwhile, in order to display vehicle driving information, etc., separately from the cluster, various displays, such as an Audio Video Navigation (AVN) display and a head-up display configured to output a projection image on a windshield, includes been installed in a vehicle.

Meanwhile, the information displayed through a head-up display is increasing. For example, in order to implement an augmented reality-based head-up display, information such as a road, a vehicle, and a surrounding object needs to be displayed, so that a screen of the head-up display needs to be increased, and eventually, a size of the head-up display needs to be increased.

The increase in the size of the head-up display results in installation constraints within the vehicle.

### [Summary]

### [Technical Problem]

The present disclosure is proposed to solve the above-described problems, and is intended to provide a display device for a vehicle capable of securing an optical path sufficient to implement a large-screen projection image while being small in size to facilitate installation within the vehicle.

### [Technical Solutions]

In order to achieve the above-described purpose, according to an aspect of the present disclosure, there is provided a display device for a vehicle comprising: an image generating device that outputs a first polarized projection image; a concave mirror including a phase delay layer for polarization conversion between first polarization and second polarization; and a transparent cover including a polarizing layer for transmitting the first polarized projection image therethrough and reflecting a second polarized projection image, wherein the concave mirror converts the first polarized projection image output from the image generating device into the second polarized projection image and primarily reflects the second polarized projection image to the transparent cover, wherein the transparent cover reflects the second polarized projection image to the concave mirror, wherein the concave mirror converts the second polarized projection image into the first polarized projection image and secondarily reflects the first polarized projection image to the transparent cover, wherein the transparent cover transmits the first polarized projection image therethrough.

The display device may further include a motor that adjusts a position of the first polarized projection image passing through the transparent cover.

A primary mirror reflective area of the concave mirror may be located closer to a front portion of the vehicle than a secondary mirror reflective area of the concave mirror.

The primary mirror reflective area may be narrower than the secondary mirror reflective area.

A cover reflective area of the transparent cover may be located closer to a front portion of the vehicle than a cover transmissive area of the transparent cover.

The cover reflective area may be narrower than the cover transmissive area.

The first polarization may be P-polarization and the second polarization may be S-polarization.

The image generating device may include one of a liquid crystal display (LCD), an organic light emitting diode (OLED), a digital mirror device, and a micro light emitting diode (LED).

The phase delay layer may include a quarter wave plate.

A first optical path, from the concave mirror to the transparent cover, of the primarily reflected second polarized projection image may be shorter than a second optical path, from the transparent cover to the concave mirror, of the second polarized projection image reflected by the transparent cover.

The second optical path may be shorter than a third optical path, from the concave mirror to the transparent cover, of the secondarily reflected first polarized projection image.

The second polarized projection image passing through the transparent cover may be irradiated to a windshield of the vehicle.

The display device for the vehicle may include a head up display (HUD).

### [Advantageous Effects]

An Effect of the display device for the vehicle according to the present disclosure will be described as follows.

According to at least one of various aspects of the present disclosure, the display device for the vehicle may secure the optical path sufficient to implement the large-screen projection image while being small in size to facilitate the installation within the vehicle.

### [Brief Description of the Drawings]

FIG. 1 is a drawing illustrating an example of the exterior and interior of a vehicle.
FIGS. 2 and 3 are drawings illustrating various examples of the internal configuration of a display device for a vehicle related to the present disclosure.
FIG. 4 is a drawing illustrating an example of an internal configuration of a display device for a vehicle according to an aspect of the present disclosure.
FIG. 5 is an enlarged cross-sectional view of a concave mirror of a display device for a vehicle in FIG. 4.
FIG. 6 illustrates optical path and polarization conversion of a projection image in a display device for a vehicle in FIG. 4.
FIG. 7 is a drawing for illustrating a reflective area and a transmissive area in a display device for a vehicle in FIG. 4.
FIG. 8 is a drawing for illustrating an optical path of a projection image of a display device for a vehicle in FIG. 4.
FIG. 9 is a drawing for comparing sizes of a display device for a vehicle in FIG. 3 and a display device for a vehicle in FIG. 4 with each other.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

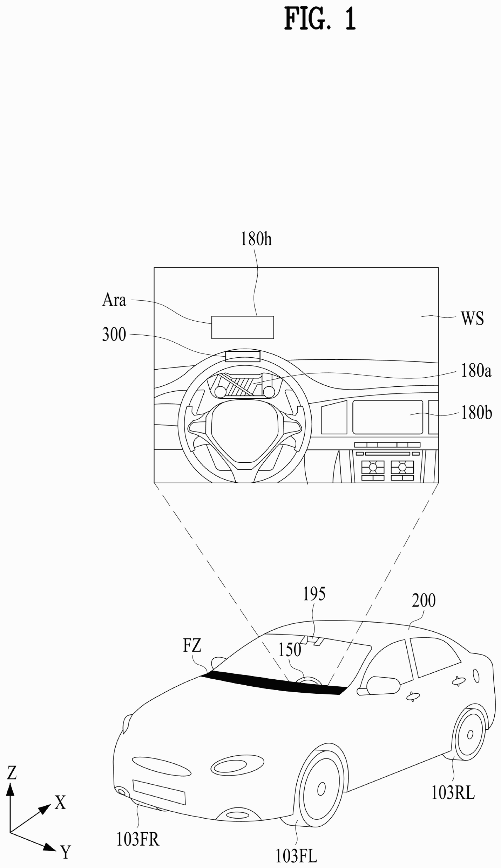

Hereinafter, an example of exterior and interior of a vehicle will be described with reference to FIG. 1. FIG. 1 is a drawing showing an example of the exterior and interior of a vehicle.

As shown in FIG. 1, a vehicle 200 is operated by a plurality of wheels 103FR, 103FL, 103RL,... that rotate by a power source and a steering wheel 150 for controlling the moving direction of the vehicle 200.

Meanwhile, the vehicle 200 can further include a camera 195 for obtaining images in front of the vehicle.

Meanwhile, the vehicle 200 can include a plurality of displays 180a, 180b, 180h, which display images, information, etc., that are provided therein.

For example, among the plurality of displays 180a, 180b, 180h, a first display 180a can be a cluster display, a second display 180b can be an Audio Video Navigation (AVN) display, and a third display 180h can be a HUD display which is a head up display (HUD) that projects an image onto a certain separated area Ara on a windshield WS. The certain separated area Ara may correspond to an eye box of a user (or a driver).

Meanwhile, a display device for a vehicle according to the present disclosure is a device for the HUD display 180h.

Meanwhile, a black masking area or a frit area Fz can be formed in the lower area of the windshield WS, as shown in the drawing.

In one example, the vehicle 200 described herein may be a concept that includes all of a vehicle equipped with an engine as a power source, a hybrid vehicle equipped with the engine and an electric motor as the power sources, an electric vehicle equipped with the electric motor as the power source, and the like.

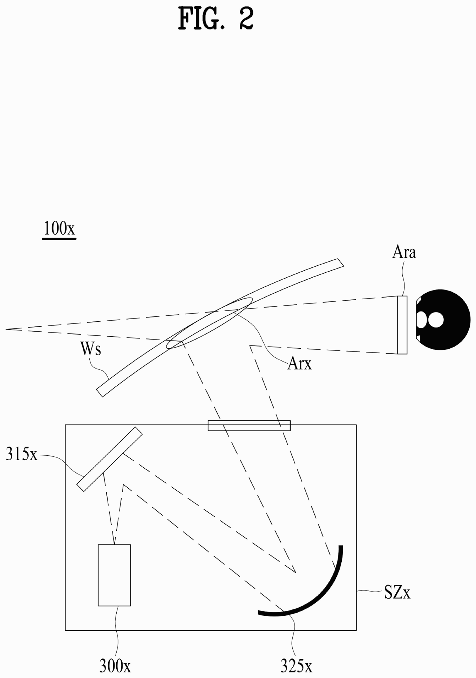

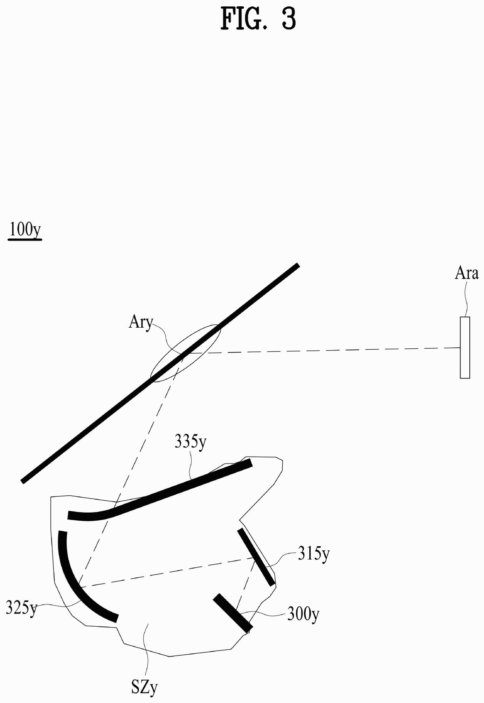

Hereinafter, with reference to FIGS. 2 and 3, internal components of the display device for the vehicle related to the present disclosure will be described. FIGS. 2 and 3 are diagrams illustrating various examples of internal components of a display device for a vehicle related to the present disclosure.

FIG. 2 illustrates an example of a display device for a vehicle related to the present disclosure.

Referring to FIG. 2, a display device 100x for a vehicle related to the present disclosure includes a liquid crystal display panel (or picture generation unit (PGU)) 300x configured to output a projection image, a fold mirror 315x configured to reflect the projection image from the liquid crystal display panel 300x, and a concave mirror 325x configured to reflect the projection image from the fold mirror 315x to a windshield WS.

The projection image reflected from a certain area Arx of the windshield WS is output to a driver's viewing area Ara.

The concave mirror 325x within the display device 100x for the vehicle is disposed between the liquid crystal display panel 300x and the driver's viewing area Ara. That is, the concave mirror 325x may be positioned between two virtual parallel lines passing through the liquid crystal display panel 300x and the driver's viewing area Ara respectively, with a gap corresponding to a separation distance between the liquid crystal display panel 300x and the driver's viewing area Ara.

Meanwhile, the concave mirror 325x in the display device 100x for a vehicle determines the arrangement of the projection image and the position of the light source.

For example, by increasing the magnification of the concave mirror 325x in the display device 100x for a vehicle and reducing the focal length, the size SZx of the display device 100x for a vehicle can be reduced.

However, when the size is reduced as such, it is difficult to implement a large-screen projection image, and thus it is difficult to implement an AR HUD.

FIG. 3 illustrates another example of a display device for a vehicle according to the present disclosure.

Referring to FIG. 3, a display device 100y for a vehicle according to the present disclosure includes a liquid crystal display panel 300y that outputs the projection image, a folded mirror 315y that reflects the projection image from the liquid crystal display panel 300y, a concave mirror 325y that reflects the projection image from the folded mirror 315y, and a transparent cover 335y that outputs the projection image from the concave mirror 325y to the windshield WS.

The projection image reflected from a predetermined area Ary of the windshield WS is output to the driver's viewing area Ara.

Unlike as shown in FIG. 2, the concave mirror 325y in the display device 100y for the vehicle is disposed in front of the liquid crystal display panel 300y and the driver's viewing area Ara.

That is, the liquid crystal display panel 300y in the display device 100y for the vehicle is disposed between the concave mirror 325y and the driver's viewing area Ara. That is, the liquid crystal display panel 300y may be positioned within a space defined by two virtual parallel lines respectively passing through the concave mirror 325y and the driver's viewing area Ara, the space corresponding to a separation distance between the concave mirror 325y and the driver's viewing area Ara.

In one example, the concave mirror 325y in the display device 100y for the vehicle determines arrangement of the projection image and a position of a light source.

For example, when a magnification of the concave mirror 325y in the display device 100y for the vehicle is increased and a focal length thereof is reduced, a size SZy of the display device 100y for the vehicle may be reduced.

However, when the size is reduced as such, it is difficult to implement the large-screen projection image, and thus it is difficult to implement the AR HUD.

Accordingly, the present disclosure proposes a method for reducing the size of the display device for the vehicle while implementing the large-screen projection image.

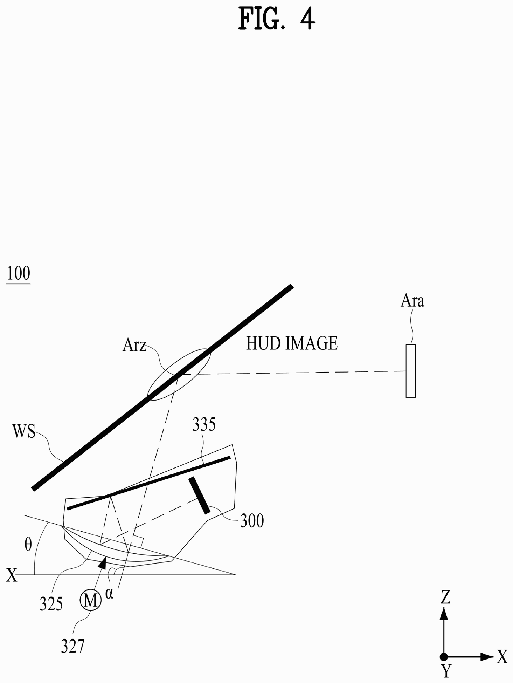

In particular, unlike as shown in FIGS. 2 to 3, a display device 100 for a vehicle using two reflections at the concave mirror is proposed. This will be described with reference to FIG. 4.

FIG. 4 is a drawing illustrating an example of an internal configuration of a display device for a vehicle according to an aspect of the present disclosure.

Referring to FIG. 4, the display device 100 for vehicle according to an aspect of the disclosure may include an image generating device 300 that outputs the projection image, a concave mirror 325 that reflects the projection image, and a transparent cover 335 that transmits the projection image reflected from the concave mirror 325 therethrough or reflects the same again. The display device 100 for the vehicle may further include a motor 327 for adjusting a position of the projection image projected onto the windshield to match an eye level of the user (or the driver) by adjusting an inclination of the concave mirror 325.

The image generating device 300 may output a projection image polarized in a specific direction. Hereinafter, the projection image output by the image generating device 300 will be referred to as a first polarized projection image. First polarization is linear polarization, and may be, for example, P-polarization. The image generating device 300 may include at least one of a liquid crystal display (LCD), an organic light emitting diode (OLED), a digital mirror device, and a micro light emitting diode (LED).

The concave mirror 325 may be disposed to be laid so as to be inclined toward a longitudinal direction of the vehicle (an X direction). The concave mirror 325 may include a phase delay layer for converting the first polarized projection image into a second polarized projection image and converting the second polarized projection image into the first polarized projection image. Second polarization is linear polarization, and may be, for example, S-polarization. An installation angle α of the concave mirror 325 with respect to the longitudinal direction of the vehicle (the X direction) may be equal to or greater than 90 degrees (e.g., 90 degrees+θ).

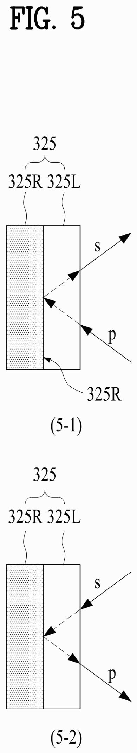

The phase delay layer may be equipped as a quarter wave plate (QWP). The role of the phase delay layer will be described with further reference to FIG. 5. FIG. 5 is an enlarged cross-sectional view of a concave mirror of a display device for a vehicle in FIG. 4.

As shown in (5-1) in FIG. 5, a first linearly polarized image (e.g., a P-polarized image) irradiated to a phase delay layer 325L may be converted into a first circularly polarized image (e.g., a right-handed circularly polarized image) while passing through the phase delay layer 325L, the first circularly polarized image may be converted into second circularly polarized image (e.g., a left-handed circularly polarized image) while being reflected by a reflective layer (or a reflective surface) 325R of the concave mirror 325, and the reflected second circularly polarized image may be converted into a second linearly polarized image (e.g., an S-polarized image) while passing through the phase delay layer 325L again.

On the other hand, as shown in (5-2) in FIG. 5, the second linearly polarized image (e.g., the S-polarized image) irradiated to the phase delay layer 325L may be converted into the second circularly polarized image (e.g., the left-handed circularly polarized image) while passing through the phase delay layer 325L, the second circularly polarized image may be converted into the first circularly polarized image (e.g., the right-handed circularly polarized image) while being reflected by the reflective layer of the concave mirror 325, and the reflected first circularly polarized image may be converted into the first linearly polarized image (e.g., the P-polarized image) while passing through the phase delay layer again.

Referring back to FIG. 4, the transparent cover 335 may serve as a dust cover for preventing inflow of foreign substances. The transparent cover 335 may be constructed as a flat surface or a curved surface depending on windshield and vehicle characteristics. A polarizing layer for reflecting the second polarized image while transmitting the first polarized image therethrough may be formed on the transparent cover 335. That is, the polarizing layer may be a mirror-type polarizing layer for reflecting the second polarized image instead of absorbing the second polarized image.

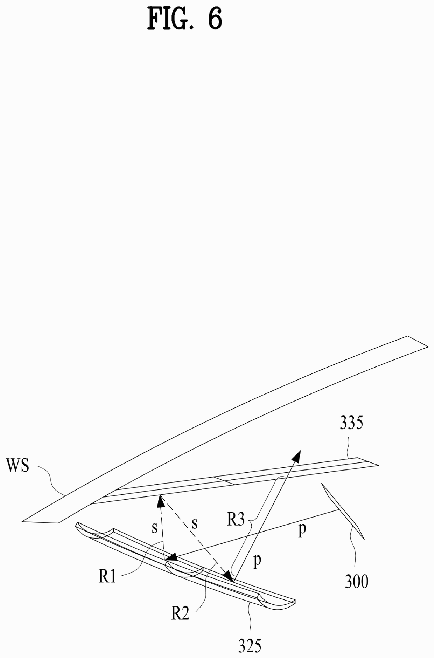

An optical path of the projection image passing via the concave mirror 325 and the transparent cover 335, and the polarization conversion of the projection image will be described with further reference to FIG. 6. FIG. 6 illustrates optical path and polarization conversion of a projection image in a display device for a vehicle in FIG. 4.

As shown in FIG. 6, the first polarized projection image (e.g., a P-polarized image) output from the image generating device 300 may be converted into the second polarized projection image (e.g., an S-polarized image) by the concave mirror 325 and reflected to the transparent cover 335. The conversion of the first polarized projection image into the second polarized projection image by the concave mirror 325 is as described above with reference to FIG. 5. An optical path, from the concave mirror 325 to the transparent cover 335, of the second polarized projection image primarily reflected by the concave mirror 325 will be referred to as a first optical path R1.

The second polarized projection image reflected to the transparent cover 335 may be reflected back to the concave mirror 325 by the polarizing layer of the transparent cover 335. As described above, the polarizing layer of the transparent cover 335 may reflect the second polarized image. An optical path, from the transparent cover 335 to the concave mirror 325, of the second polarized projection image reflected by the transparent cover 335 will be referred to as a second optical path R2.

The second polarized projection image reflected by the polarizing layer may be converted into the first polarized projection image (e.g., the P-polarized image) by the concave mirror 325 and may be reflected back to the transparent cover 335. The conversion of the second polarized projection image into the first polarized projection image by the concave mirror 325 is as described above with reference to FIG. 5. An optical path, from the concave mirror 325 to the transparent cover 335, of the first polarized projection image secondarily reflected by the concave mirror 325 will be referred to as a third optical path R3.

The first polarized projection image reflected back to the transparent cover 335 may pass through the polarizing layer of the transparent cover 335. As described above, the polarizing layer of the transparent cover 335 may transmit the first polarized image therethrough.

When comparing the first optical path R1, the second optical path R2, and the third optical path R3 with each other, the second optical path R2 may be longer than the first optical path R1, and the third optical path R3 may be longer than the second optical path R2.

Referring back to FIG. 4, the transmitted first polarized projection image is reflected in the predetermined area Arz of the windshield WS and output to the driver's viewing area Ara.

As described above, because the concave mirror 325 is disposed to be considerably laid down along a horizontal longitudinal direction of the vehicle (the X direction), even when the concave lens 325 having a relatively great size is disposed in the display device 100 for the vehicle, a size in an up-down direction of the display device 100 for the vehicle may not be greatly affected. In addition, the display device 100 for the vehicle is constructed such that the projection image output from the image generating device 300 is reflected twice by the concave mirror 325 and output to the windshield WS, thereby securing an optical path of a sufficient length for the projection image. The size of the display device 100 for the vehicle may reduced as much as the optical path of the sufficient length may be secured.

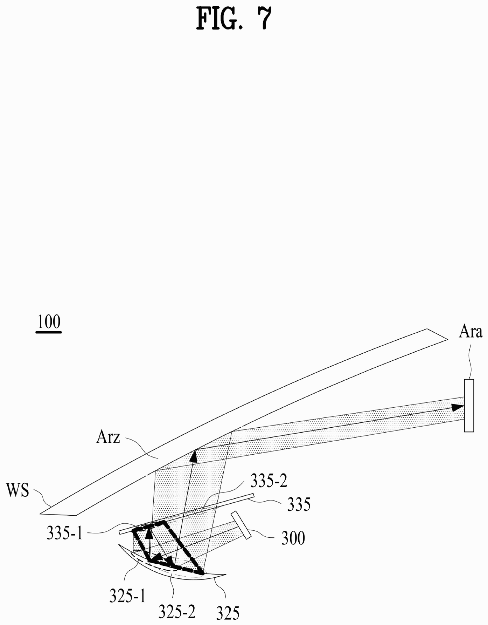

An area in which the projection image is primarily reflected (hereinafter, referred to as a primary mirror reflective area) and an area in which the projection image is secondarily reflected (hereinafter, referred to as a secondary mirror reflective area) in the concave mirror 325, and an area in which the projection image is reflected (hereinafter, referred to as a cover reflective area) and an area in which the projection image is transmitted (hereinafter, referred to as a cover transmissive area) in the transparent cover 335 in the display device 100 for the vehicle according to FIG. 4 will be described with further reference to FIG. 7. FIG. 7 is a drawing for illustrating a reflective area and a transmissive area in a display device for a vehicle in FIG. 4.

As shown in FIG. 7, the projection image output from the image generating device 300 may be reflected to the transparent cover 335 by a primary mirror reflective area 325-1 of the concave mirror 325. The primary mirror reflective area 325-1 may be an area that is biased toward a front portion of the vehicle within an entire area of the concave mirror 325. The projection image reflected by the primary mirror reflective area may be directed to the transparent cover 335.

The projection image directed to the transparent cover 335 may be reflected to the concave mirror 325 by a cover reflective area 335-1 of the transparent cover 335. The cover reflective area 335-1 may be an area that is biased toward the front portion of the vehicle within an entire area of the transparent cover 335. The projection image reflected by the cover reflective area 335-1 may be directed to the concave mirror 325.

The projection image directed to the concave cover 325 may be reflected to the transparent cover 335 by a secondary mirror reflective area 325-2 of the concave mirror 325. The secondary mirror reflective area 325-2 may be an area that is biased toward a rear portion of the vehicle within the entire area of the concave mirror 325. The secondary mirror reflective area 325-2 may partially overlap the primary mirror reflective area 325-1. The secondary mirror reflective area 325-2 may be wider than the primary mirror reflective area 325-1. Depending on a design, the secondary mirror reflective area 325-2 may completely include the primary mirror reflective area 325-1.

The projection image directed to the transparent cover 335 may pass through a cover transmissive area 335-2 of the transparent cover 335. The cover transmissive area 335-2 may be an area biased toward the rear portion of the vehicle within the entire area of the transparent cover 335. The cover transmissive area 335-2 may partially overlap the cover reflective area 335-1. The cover transmissive area 335-2 may be wider than the cover reflective area 335-1. Depending on a design, the cover transmissive area 335-2 may completely include the cover reflective area 335-1.

As described above, the transmitted projection image is reflected in the predetermined area Arz of the windshield WS and output to the driver's viewing area Ara.

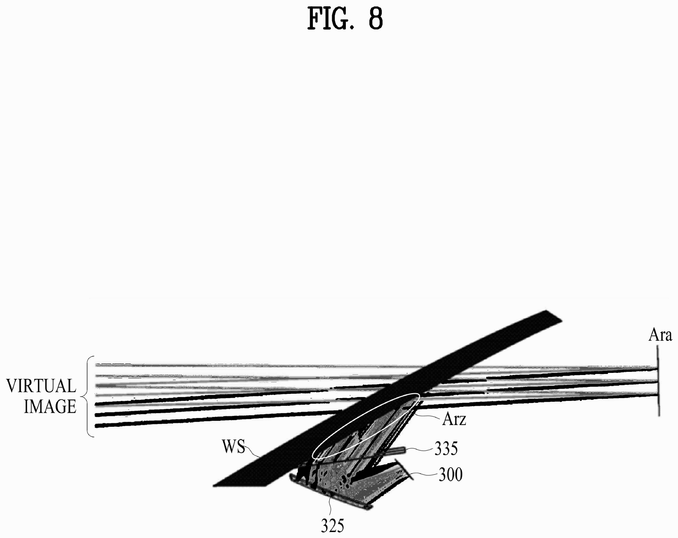

Hereinafter, the optical path of the projection image of the display device for the vehicle in FIG. 4 will be described with reference to FIG. 8. FIG. 8 is a drawing for illustrating an optical path of a projection image of a display device for a vehicle in FIG. 4.

The projection image output from the image generating device 300 may be primarily reflected from the concave mirror 325 to the transparent cover 335.

The primarily reflected projection image may be reflected to the concave mirror 325 by the transparent cover 335.

The projection image directed to the concave cover 325 may be secondarily reflected to the transparent cover 335 by the concave mirror 325.

The secondarily reflected projection image may pass through the transparent cover 335.

The transmitted projection image may be reflected in the predetermined area Arz of the windshield WS and output to the driver's viewing area Ara.

Accordingly, the projection image may be viewed as a virtual image to the driver on an opposite side of the windshield WS (that is, outside of the windshield WS).

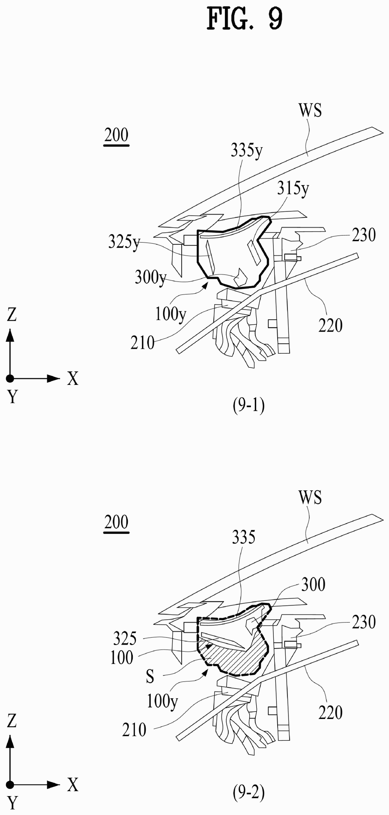

Hereinafter, referring to FIG. 9, sizes of the display device 100y for the vehicle according to FIG. 3 and the display device 100 for the vehicle according to FIG. 3 will be compared with each other. FIG. 9 is a drawing for comparing sizes of a display device for a vehicle in FIG. 3 and a display device for a vehicle in FIG. 4 with each other.

(9-1) in FIG. 9 illustrates a partial cross-sectional view of the vehicle 200 in which the display device 100y for the vehicle according to FIG. 3 is installed. (9-2) in FIG. 9 illustrates a partial cross-sectional view of the vehicle 200 in which the display device 100 for the vehicle according to FIG. 4 is installed.

As shown in FIG. 9, the display devices 100 and 100y for the vehicle installed in the vehicle may be adjacent to a brake structure 210, a steering wheel structure 220, an HUD frame 230, and the like.

It may be seen that the display device 100 for the vehicle according to FIG. 4 has a smaller size than the display device 100y for the vehicle according to FIG. 3, so that a volume occupied by the display device may be much reduced. That is, as shown in (9-2) in FIG. 9, the volume may be reduced by an area S indicated by the hatching. This is because, as described above, the display device 100 for the vehicle is constructed such that not only the concave mirror 325 is disposed to be laid so as to be inclined toward the longitudinal direction of the vehicle (the X direction), but also the projection image is reflected twice by the concave mirror 325 and the planar mirror 315y is not required. For these reasons, it is apparent that the display device 100 for the vehicle according to FIG. 4 is also smaller in size than the display device 100X for the vehicle according to FIG. 2.

In one example, in order to prevent damage from sunlight, a heat blocking film may be applied to a front end of the image generating device, the concave mirror, or the dust cover. In addition, a posture of each optical component may be changed depending on the windshield WS of the vehicle and an installation space of the display device for the vehicle, and a virtual image distance and a field of view (FOV) may also be changed depending on a demand.

The detailed description above should not be construed as restrictive in all respects but should be considered as illustrative. The scope of the present disclosure should be determined by a reasonable interpretation of the appended claims, and all changes within the equivalent scope of the present disclosure are intended to be included within the scope of the present disclosure.

## Claims

1. A display device for a vehicle, the display device comprising:
an image generating device configured to output a first polarized projection image;
a concave mirror including a phase delay layer for polarization conversion between first polarization and second polarization; and
a transparent cover including a polarizing layer for transmitting the first polarized projection image therethrough and reflecting a second polarized projection image,
wherein the concave mirror is configured to convert the first polarized projection image output from the image generating device into the second polarized projection image and primarily reflect the second polarized projection image to the transparent cover,
wherein the transparent cover is configured to reflect the second polarized projection image to the concave mirror,
wherein the concave mirror is configured to convert the second polarized projection image into the first polarized projection image and secondarily reflect the first polarized projection image to the transparent cover,
wherein the transparent cover is configured to transmit the first polarized projection image therethrough.

2. The display device of claim 1, further including a motor configured to adjust a position of the first polarized projection image passing through the transparent cover.

3. The display device of claim 1, wherein a primary mirror reflective area of the concave mirror is located closer to a front portion of the vehicle than a secondary mirror reflective area of the concave mirror.

4. The display device of claim 3, wherein the primary mirror reflective area is narrower than the secondary mirror reflective area.

5. The display device of claim 1, wherein a cover reflective area of the transparent cover is located closer to a front portion of the vehicle than a cover transmissive area of the transparent cover.

6. The display device of claim 5, wherein the cover reflective area is narrower than the cover transmissive area.

7. The display device of claim 1, wherein the first polarization is P-polarization and the second polarization is S-polarization.

8. The display device of claim 1, wherein the image generating device includes one of a liquid crystal display (LCD), an organic light emitting diode (OLED), a digital mirror device, and a micro light emitting diode (LED).

9. The display device of claim 1, wherein the phase delay layer includes a quarter wave plate.

10. The display device of claim 1, wherein a first optical path, from the concave mirror to the transparent cover, of the primarily reflected second polarized projection image is shorter than a second optical path, from the transparent cover to the concave mirror, of the second polarized projection image reflected by the transparent cover.

11. The display device of claim 10, wherein the second optical path is shorter than a third optical path, from the concave mirror to the transparent cover, of the secondarily reflected first polarized projection image.

12. The display device of claim 1, wherein the second polarized projection image passing through the transparent cover is irradiated to a windshield of the vehicle.

13. The display device of claim 1, wherein the display device for the vehicle includes a head up display (HUD).
